# EUROPEAN PATENT APPLICATION

(11) **EP 4 331 823 A1**
(43) Date of publication of application: **06.03.2024**
(21) Application number: 22193686.7
(22) Date of filing: 02.09.2022
(51) Int. Cl.: B29D 99/00, F03D 1/06

(54) **METHOD OF MANUFACTURING A MODULAR WIND TURBINE ROTOR BLADE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The application describes a method of manufacturing a wind turbine rotor blade (1) comprising two or more rotor blade segments (11, 12), which method comprises the steps of providing a mould (3, 30S, 30P) for the entire rotor blade (1), the mould comprising a lower shell (30S) and an upper shell (30P); forming a lower layup (2S) in the lower shell (30S), which lower layup (2S) includes a connector (15) for adjacent rotor blade segments (11, 12) and a spar cap (13C) on either side of the connector (15); placing a mandrel (31) onto the lower layup (2S), the mandrel (31) extending across the connector (15) of the lower layup (2S); forming a corresponding upper layup (2P) over the mandrel (31), which upper layup (2P) comprises a connector (15) for adjacent rotor blade segments (11, 12) and a spar cap (13C) on either side of the connector (15); and placing the upper shell (30P) onto the upper layup (2P). The invention further describes a wind turbine rotor blade (1) manufactured using such a method.

## Description

### Background

The power output capacity of wind turbines has increased significantly, made possible by developments in design such as tall towers and long rotor blades. For example, a large horizontal-axis wind turbine can have rotor blades with a length of 100 m or more. However, the length of such rotor blades can lead to difficulties if the rotor blades must be transported by rail or by road, or if harbour facilities are inadequate. To avoid transportation problems, therefore, a rotor blade may be manufactured in segments that can be transported without difficulty. Such a wind turbine rotor blade may be referred to as a "modular" or "segmented" rotor blade.

There are various ways of manufacturing wind turbine rotor blades. Generally, composite material layers such as fibreglass mats, sheets and rovings are laid up in a mould that is shaped to form the desired aerodynamic profile of the part being moulded. The mould is closed, and resin is infused into the composite material. After curing, the part is removed from the mould and the surface is finished.

An important structural component of a wind turbine rotor blade is the spar or "beam", which generally comprises a web at right angles to the chord plane, and spar caps at either end of the web. The spar caps are embedded in the composite material of the rotor blade body, i.e. one spar cap is included in the layup of the suction side, and the other spar cap is included in the layup of the pressure side. Generally, for any given airfoil shape, a design goal is to maximize the distance between pressure-side and suction-side spar caps, i.e. to maximize the height of the web under consideration of Steiner's theorem, which describes a quadratic dependency between the load-bearing capacity of a beam and its beam height. This is achieved by arranging the web along the largest transverse of the airfoil, and arranging the spar caps directly in the airfoil body.

In one rotor blade manufacturing technique, a first mould is used to form only the pressure side of the rotor blade, and a separate second mould is used to form only the suction side. After removing the cured parts from the two separate moulds, the rotor blade "shells" are glued along their trailing edge and leading edge to complete the rotor blade. This two-mould technique is known as the "butterfly mould" technique.

To manufacture a modular rotor blade, each segment can be formed separately using a butterfly mould technique, requiring a total of four moulds for a two-segment rotor blade. Complementary connector parts must be embedded in the layup so that the rotor blade segments can later be connected. To this end, connector parts are embedded in each pressure-side mould and in each suction-side mould. For structural stability of the assembled rotor blade, each connector part is thicker than a spar cap and is realised as a physical extension or continuation of the spar cap, so that the spar cap of one rotor blade segment is structurally connected to its continuation spar cap in the adjacent rotor blade segment (the web also extends across the junction between rotor blade segments). To obtain a smooth outer surface of the rotor blade, the connector parts are shaped so that the "extra thickness" protrudes into the interior of the rotor blade. However, in this approach to the construction of a modular rotor blade, the inwardly-protruding connector thickness reduces the height of the web in the region of the connector. Since the load-bearing capacity of an airfoil is determined primarily by the height of its beam as explained above, the decreased web height reduces the rotor blade's ability to withstand flap-wise static loads, leading to fatigue damage and a reduced rotor blade lifetime.

Furthermore, it is costly to provide a butterfly mould (i.e. a pressure-side mould and a suction-side mould) for each rotor blade segment, since all parts must be carefully formed to ensure a continuation of the aerodynamic profile at the junction between segments. Therefore, each shell can be moulded in one piece, from root to tip, with complementary connector parts embedded in the layup at the location corresponding to the future connection interface. After curing and demoulding the shells, the edges of the shells are glued along their trailing edge and leading edge, and the "complete" rotor blade is then sawn or cut at the connection interface to separate the segment shells. The rotor blade segments can then be assembled at a wind turbine installation site.

In another rotor blade manufacturing technique, a single mould or "integral mould" is used to produce a complete rotor blade. The mould comprises a lower mould half ("lower shell") and an upper mould half ("upper shell"), shaped to form the suction side and pressure side of the rotor blade. The entire layup is completed in the lower mould, whereby a suitably-shaped mandrel is arranged on the lower layup to carry the weight of the upper layup. A mandrel is a supporting tool, having a tapering shape similar to the tapering shape of the rotor blade interior, which supports the weight of the upper layup. The mould is closed by placing the upper shell onto the completed layup. After curing and de-moulding the complete rotor blade, the mandrel is pulled out in the direction of the root end. This integral mould technique is particularly suited for shaping a long rotor blade with a complex shape, for example a "pre-bent" rotor blade in which the outboard end is shaped to curve into the upwind direction during low-wind conditions. A pre-bent rotor blade shape is effective at preventing tip-tower collisions during high-wind conditions.

However, the known integral mould technique cannot be used to manufacture a long modular rotor blade. This is because a mandrel cannot be deployed. As explained above, the mandrel must be removed from the rotor blade interior after the curing and de-moulding stages are completed, which means that the rotor blade interior must be free of any inwardly-protruding elements which would otherwise prevent removal of the mandrel. However, the connector parts for a prior art modular rotor blade protrude significantly into the interior of the rotor blade, and would prevent removal of a mandrel.

It is therefore an object of the invention to overcome the problems associated with the manufacture of a modular rotor blade.

This object is achieved by the claimed method of manufacturing a modular wind turbine rotor blade, and by the claimed wind turbine rotor blade.

### Description

In the context of the invention, a modular wind turbine rotor blade shall be understood to comprise two or more rotor blade segments. In the case of two segments, these can have essentially the same length, i.e. the connection interface is located mid-span at about 50% of the rotor blade length. Equally, a segment can be positioned further inboard (e.g. at 20% - 40% of the rotor blade length) and/or further outboard (e.g. at 70% - 90% of the rotor blade length).

According to the invention, the method of manufacturing such a modular rotor blade comprises the steps of providing a mould for the entire rotor blade, the mould comprising a lower shell and an upper shell; forming a lower layup in the lower shell, which lower layup comprises two or more segment layup portions and a connector between adjacent segment layup portions; placing a mandrel onto the lower layup, the mandrel extending across the connector between adjacent segment layup portions; and completing the layup procedure by forming a corresponding upper layup over the mandrel and placing the upper shell onto the upper layup to close the mould.

A "mould for the entire rotor blade" shall be understood as a mould that extends from the essentially circular root end to the outermost tip end. The mould comprises a lower half or shell (e.g. for the suction side) and an upper half or shell (e.g. for the pressure side), and each shell has a flange about its perimeter to facilitate connection to the other shell when the mould is closed and sealed in preparation for the subsequent resin infusion step. The inventive method allows a mandrel to be used to support the weight of the upper layup.

An advantage of the inventive method is that the preferable "closed mould" technique can be applied to form the segments of a modular rotor blade using a mould constructed for casting a non-modular rotor blade. This avoids the considerable cost of having to manufacture moulds for the separate segments. An already existing mould for a certain rotor blade specification can be used to cast a modular rotor blade with the same specification.

A further advantage of the inventive method is that the height of the web can be maintained at a favourable maximum across the junction between rotor blade segments. The assembled rotor blade is therefore characterized by a favourably high load-bearing capacity even though it comprises two physically separate parts.

According to the invention, the wind turbine rotor blade is manufactured using the method described above. After de-moulding and removing the mandrel, the rotor blade segments are separated by cutting between complementary connector parts. The rotor blade segments can then be transported without difficulty to an installation site, and the rotor blade is re-assembled by connecting the segments.

The inventive modular rotor blade is characterized by an interior cavity which, at the joint between rotor blade segments, is free of inwardly protruding connector parts that would prevent removal of a mandrel. At both the pressure side and the suction side, the inner faces of the outboard spar cap and connector lie in a common plane, allowing removal of the mandrel: during manufacture of the modular rotor blade using an integral mould, the essentially smooth interior surfaces facilitated placement of a mandrel across the connection interface; after de-moulding the cured rotor blade, the essentially smooth interior surfaces facilitated straightforward removal of the mandrel.

As a result of the inventive manufacturing method, the rotor blade has very favourable structural properties as regards the connection between segments. This is because the body of the connector does not protrude into the interior of the rotor blade, in contrast to a prior art segmented rotor blade. In the inventive rotor blade, the maximum possible distance between pressure-side and suction-side spar caps can be maintained over the joint between segments, by arranging the connector so that it does not protrude into the interior.

Furthermore, the inventive modular rotor blade is characterized by the absence of any adhesive joint along the trailing edge and leading edge (i.e. between the pressure side and the suction side), since the entire rotor blade is formed as one piece in the integral mould and then separated into segments after de-moulding.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the integral mould is shaped to form a long wind turbine rotor blade with a root-to-tip length of 100 m or more. The mould may be shaped to form a pre-bent rotor blade, i.e. a rotor blade that curves in the upwind direction in its unloaded state.

The expressions "segment" and "module" may be used interchangeably in the following when referring to a rotor blade segment.

The connection between rotor blade segments is formed by a pair of complementary connector end-pieces at the suction side (one in the inboard segment and one in the outboard segment) and a pair of complementary connector end-pieces at the pressure side (one in the inboard segment and one in the outboard segment). Elements of a connector can be made of any suitable material, for example carbon-fibre reinforced polymer (CFRP). However, in a particularly preferred embodiment of the invention, a connector is made primarily of fiberglass-reinforced plastic (FRP) or "fibreglass", which is robust and economical.

To join two rotor blade segments, fasteners can be inserted through holes or inserts in the connector end-pieces. The inserts preferably extend in the spanwise direction. In an exemplary embodiment, the fasteners for joining the segments of a long rotor blade may have a diameter in the order of 15 mm - 50 mm and a length in the order of 10 cm - 50 cm. A suitable number of fasteners (for example 5 - 20, depending on various factors such as connector width, airfoil thickness, expected load, etc.) can be used to join the connector end-pieces at the suction side, and a similar number of fasteners can be used to join the connector end-pieces at the pressure side. In the following, the "end-piece" of a connector shall be understood as the part that receives the fasteners. In one exemplary connection, the fasteners for each side of the rotor blade can protrude on each side of a sturdy fastener block, which is shaped to fit between the complementary end-pieces of a connector. In other words, a fastener block is arranged between the end-pieces of the suction-side connector, and a fastener block is arranged between the end-pieces of the pressure-side connector. Of course, any suitable type of fastener can be deployed to form the connection between rotor blade segments.

For this type of connection, each end-piece has a plurality of inserts to receive relatively large fasteners. This "missing material" must be compensated for by increasing the thickness of the end-piece, introducing a height discrepancy between spar cap and connector. The height discrepancy is even greater when the spar cap and connector are made of different materials, for example fibreglass (connector) and CFRP (spar cap). In the inventive modular rotor blade, the thickness of an end-piece exceeds the thickness of a spar cap by a factor of at least 130%.

The spar caps of the inventive modular rotor blade can be made of any suitable material, for example fibreglass. However, in a particularly preferred embodiment of the invention, the spar caps of the modular rotor blade are made using a carbon-fibre reinforced material such as a carbon-fibre reinforced polymer (CFRP), which allows a favourably thin spar cap construction with the required structural properties. Of course, any suitable combination of materials may be used in construction of a spar cap.

Since a CFRP spar cap can be considerably thinner and narrower than a fibreglass connector end-piece, a connector preferably comprises a suitably-shaped transition section extending between a spar cap and an end-piece. For example, in the case of a two-piece rotor blade with a length of 100 m or more and a joint in the middle of the rotor blade, the spar cap may have a height in the order of 50 mm and a width in the order of 400 mm in the vicinity of the joint. An end-piece at that joint may require a thickness in the order of 90 mm to fulfil the requirements of structural strength, and a width in the order of 900 mm in order to accommodate the required number of fasteners. The connector can include a section that transitions gradually (e.g. over a length of several metres) between the spar cap and the end-piece. This transition section can be formed as a scarf joint engaging with the spar cap.

The step of forming a layup comprises arranging layers of composite material pieces in a predetermined sequence, and embedding a spar cap in the composite material layers. The lower layup is formed in the lower shell, and the upper layup is formed on the mandrel. The mandrel essentially has the shape of the interior cavity of the rotor blade, and fills this cavity to facilitate formation of the upper layup. Since the rotor blade width and height taper progressively in the direction of the tip, the mandrel also has a gradually tapering shape between the essentially circular root end and a flatter airfoil region. Support for the upper layup may not be required over the entire length of the mould, for example the final 5% in the outboard end of the rotor blade may incorporate structural elements such as ribs. The mandrel may therefore be required over 95% of the rotor blade length.

As indicated above, the purpose of the spar caps is to anchor the structurally relevant web (or "shear web") in a spanwise direction in the interior cavity of the rotor blade. For a rotor blade with a length in the order of 100 m and a root end diameter in the order of 6 m, the web may have a diameter approaching 6 m at its inboard end, tapering to a flat "airfoil" shape at its outboard end. In the inventive method, the web is attached to the first spar cap (in the lower layup) prior to placing the mandrel in the lower shell. The second spar cap can then be mounted to the upper edge of the web and embedded in the upper layup.

To account for the presence of the web during the layup procedure, the mandrel comprises a first mandrel part shaped for placement along the leading-edge side of the shear web, and a second mandrel part shaped for placement along the trailing-edge side of the shear web. Each mandrel part can be a one-piece part extending "from root to tip", for example with a semi-circular shape at the root end, tapering gradually to a flatter outboard end, and with a straight vertical face that will lie against the shear web.

Along the entire length of the mandrel, the interior surface of the layup must be free of any intrusions, i.e. the interior surface of layup must progress in a smooth manner. To this end, during the lower layup procedure, the inward-facing surfaces of the spar caps are arranged to lie in the same plane as the inward-facing surfaces of the lower layup connector. Similarly, when forming the upper layup, the inward-facing surfaces of the spar caps are arranged to lie in the same plane as the inward-facing surfaces of the upper layup connector.

However, as explained above, the thickness of the end-piece can significantly exceed the thickness of the spar cap, for example by a factor in the order of 1.5. This means that the "extra height" of the connector is arranged towards the rotor blade exterior. The thickness coefficient of the airfoil (the ratio of airfoil thickness to chord length) therefore increases towards the junction between adjacent segments.

The invention is based on the insight that any effect of the added external thickness at the joint between rotor blade segments is outweighed by the benefits of maximizing the distance between pressure-side and suction-side spar caps, i.e. maximizing the height of the beam over the connection interface. By avoiding or minimizing a reduction in beam height, the capacity of the airfoil to withstand static flap-wise loads can be maintained according to Steiner's theorem. Owing to the favourable beam height across the connection interface, the rotor blade's ability to withstand flap-wise static loads is not compromised by the connection interface, so that fatigue damage can be avoided.

Furthermore, by avoiding inwardly-protruding elements at the connector interface, a segmented rotor blade can be manufactured using an integral mould as described above.

The moulding technique described above can be performed in an integral mould that is shaped to receive the outwardly protruding connection interface region. For example, the lower shell and upper shell can be formed to have suitably-shaped recesses. However, in a particularly preferred embodiment of the invention, an already available integral mould is adapted for the production of a segmented rotor blade. For example, before beginning the lower layup, a height adapter or "dummy" is arranged in the lower shell on either side of the junction between segments. The dummy can have the shape of a wedge, tapering gradually on all sides, with its greatest height at the transition from spar cap to scarf. In this way, there is no need to construct a mould that is shaped to receive the outwardly-protruding connector parts, which would entail considerable expense.

After completing the layup, the mould is closed by connecting the upper shell to the lower shell. In a subsequent step, vacuum-assisted resin infusion is performed to infuse resin throughout the composite material layers. The resin-infused layup is allowed to cure, after which the mould is opened and the cured rotor blade is de-moulded. The mandrel is then pulled out through the root end of the cured modular rotor blade. The rotor blade segments are then separated by cutting or sawing at the junction between segments. After various finishing steps are completed (sanding, polishing, application of protective coatings, attachment of aerodynamic add-ons, etc.), the rotor blade segments can be transferred to storage or transported to an installation site.

Equally, a butterfly moulding technique can benefit from the inventive approach to forming the connection interface between segments. In the butterfly moulding technique, the lower shell and upper shell are manufactured separately. In this case also, each shell mould can be shaped to receive the outwardly protruding connection interface region. Alternatively, as described above, an already available shell mould can be adapted for the production of a segmented rotor blade by arranging dummies at the appropriate positions in the shell moulds, on either side of the intended junction between segments. Again, the use of dummies to adapt existing shell moulds may be preferable, since it avoids the cost of manufacturing dedicated shell moulds. After completing the layup in the shell moulds, vacuum-assisted resin infusion is performed and the cured shells are de-moulded. The shells are glued along their outer edges to form a complete rotor blade, and the segments are then separated by cutting or sawing at the junction between segments. The rotor blade thus manufactured benefits from the favourably maximized distance between pressure-side and suction-side spar caps, i.e. the height of the web in a "butterfly-moulded" modular rotor blade need not be sacrificed across the connection interface.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 is a schematic drawing of a connector for a segmented wind turbine rotor blade;
Figures 2 - 5 present various ways of arranging the connector during the inventive manufacturing method;
Figure 6 shows stages in the inventive manufacturing method;
Figure 7 shows a side view of an embodiment of the inventive rotor blade;
Figure 8 and Figure 9 illustrate a prior art manufacturing method.

In the diagrams, like numbers refer to like objects throughout. Objects in the diagrams are not necessarily drawn to scale.

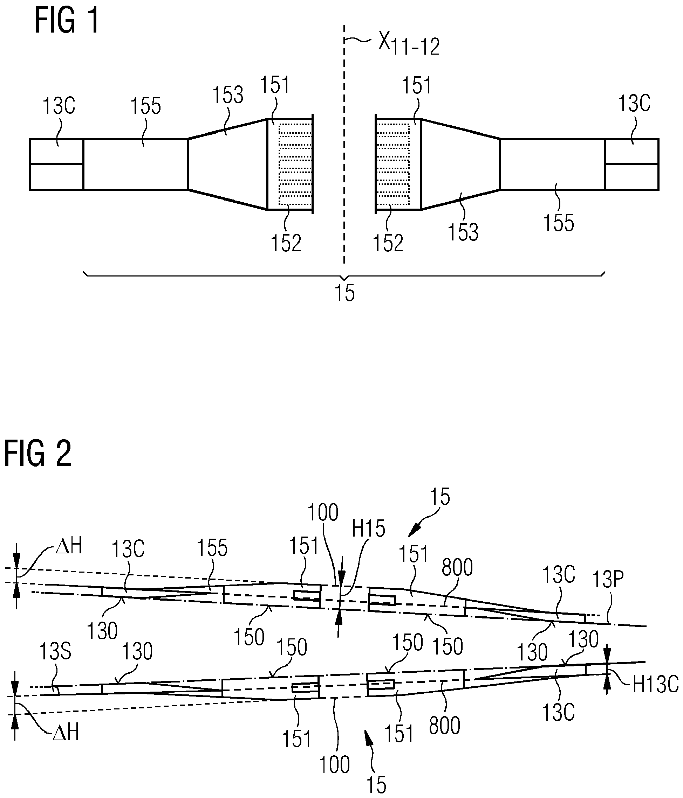

Figure 1 is a schematic plan view of a connector 15 for a segmented wind turbine rotor blade. The rotor blade will have one connector at the pressure-side, and another (essentially identical) connector at the suction-side.

The diagram shows an inboard spar cap 13C and an outboard spar cap 13C. These terminate some distance from the junction between rotor blade segments. At the junction X₁₁₋₁₂ between segments, two complementary end-pieces 151 face each other (a gap is shown here for the sake of illustration, but need not be present). Each end-piece 151 has several inserts 152 or bolt bushings to receive fasteners (e.g. threaded stud bolts) when the segments are assembled for installation at a wind turbine. The inserts 152 are sealed in preparation for the resin infusion step.

In this exemplary embodiment, an end-piece 151 of a connector 15 segues into a tapered portion 153 which in turn segues into a scarf 155 that engages with a spar cap 13C.

The connector parts 151, 153, 155 can be made entirely of fibreglass, since this material can withstand the stresses at the joint when the assembled rotor blade is operational. The spar caps 13C can comprise CFRP elements on account of their low weight and high strength.

Figures 2 - 5 present various ways of arranging the connector 15 during the inventive manufacturing method. Each diagram shows - in cross-section - a pair of connectors 15, one on each side of the completed layup, corresponding to their positions in the assembled rotor blade. In the diagrams, dashed lines indicate the resulting outer surface 100 of the rotor blade 1 after casting, and the outer surface 800 of a conventional rotor blade cast in the same mould. The diagrams indicate the difference ΔH between the height H15 of an end-piece 151 and the height H13C of the corresponding spar cap 13C.

In Figure 2, all "extra material" is located towards the rotor blade exterior, i.e. the connector parts are "flipped". As a result, the inward-facing surfaces 130 of the pressure-side spar caps 13C and the inward-facing surfaces 150 of the pressure-side connector 15 all lie in a common plane 13P. Similarly, the inward-facing surfaces 130 of the suction-side spar caps 13C and the inward-facing surfaces 150 of the suction-side connector 15 all lie in a common plane 13S.

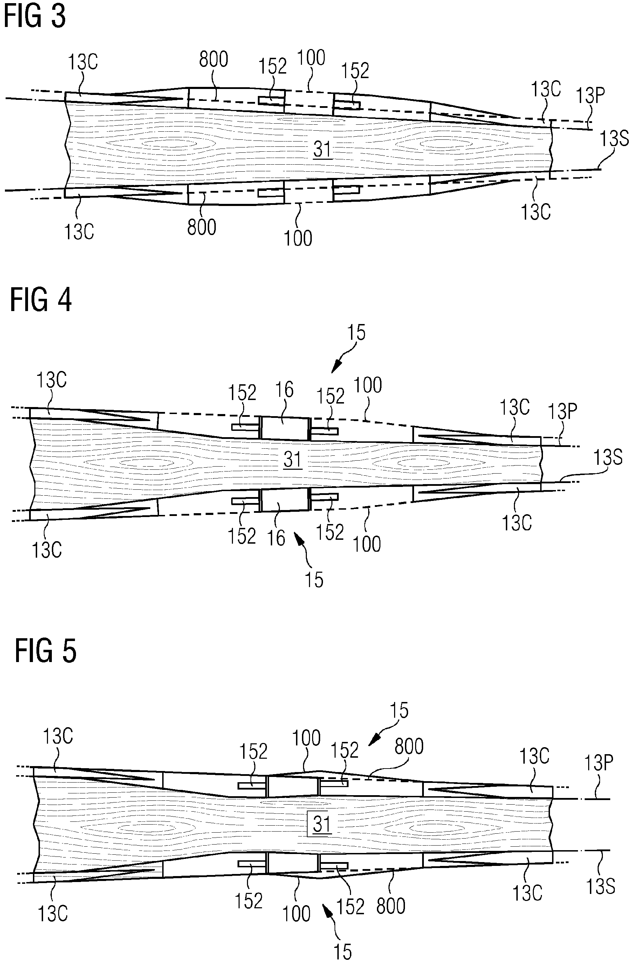

Figure 3 shows how the embodiment of Figure 2 may be realised. The diagram indicates the lower shell 30S containing the lower layup 2S, a mandrel 31, and the upper shell 30P in place over the upper layup 2P. The lower shell 30S was initially prepared by placing a suitably-shaped dummy on either side of the intended junction X₁₁₋₁₂ between segments, followed by the step of forming the lower layup. After completing the upper layup 2P, suitably-shaped dummies are placed on either side of the junction X₁₁₋₁₂ to compensate for the height difference between pressure-side connectors 15 and pressure-side spar caps 13C. The upper shell 30P is then placed on the upper layup 2P.

Figure 4 shows an alternative embodiment, in which only the outboard connectors 15 (on the right-hand side of the junction X₁₁₋₁₂) are "flipped" or turned outwards. The inboard connector parts (on the left-hand side of the junction X₁₁₋₁₂) are arranged in the conventional fashion, with the added thickness protruding into the interior. This embodiment also allows a mandrel 31 to be placed across the junction X₁₁₋₁₂, and facilitates removal of the mandrel 31 from the cured rotor blade. Here also, suitably-shaped dummies can be deployed on the right-hand side of the junction X₁₁₋₁₂. This embodiment is based on the insight that it is sufficient for the outboard segment to be formed without inwardly-intruding connector parts, since this configuration facilitates removal of the mandrel.

In each of the above embodiments, the inserts 152 of the inboard end-pieces 151 are aligned with the inserts 152 of the outboard end-pieces 151, and fasteners such as threaded stud bolts can later be inserted to extend between complementary end-pieces 151 during re-assembly of the module rotor blade.

Figure 5 shows a similar embodiment in which the outboard connector parts are "flipped" or turned outwards. In a similar configuration to Figure 4, the inboard connector parts are arranged in the conventional fashion, with the extra thickness located in the interior. However, in this embodiment, the outboard connector parts are placed further apart than the embodiment in Figure 4 in order to increase the distance between pressure-side spar cap 13C and suction-side spar cap 13C. As a result, the inserts of the outboard end-pieces 151 are offset from the inserts of the inboard end-pieces 151. The segments 11, 12 can be joined later by a suitable fastener block 16 with an offset arrangement of fasteners 160 as indicated here. This configuration is based on the insight that the increased web height in the outboard region can result in a significant improvement in the structural properties of the assembled rotor blade. This embodiment also allows a mandrel 31 to be placed across the junction X₁₁₋₁₂, and facilitates removal of the mandrel 31 from the cured rotor blade. Here also, suitably-shaped dummies can be deployed on the right-hand side of the junction X₁₁₋₁₂.

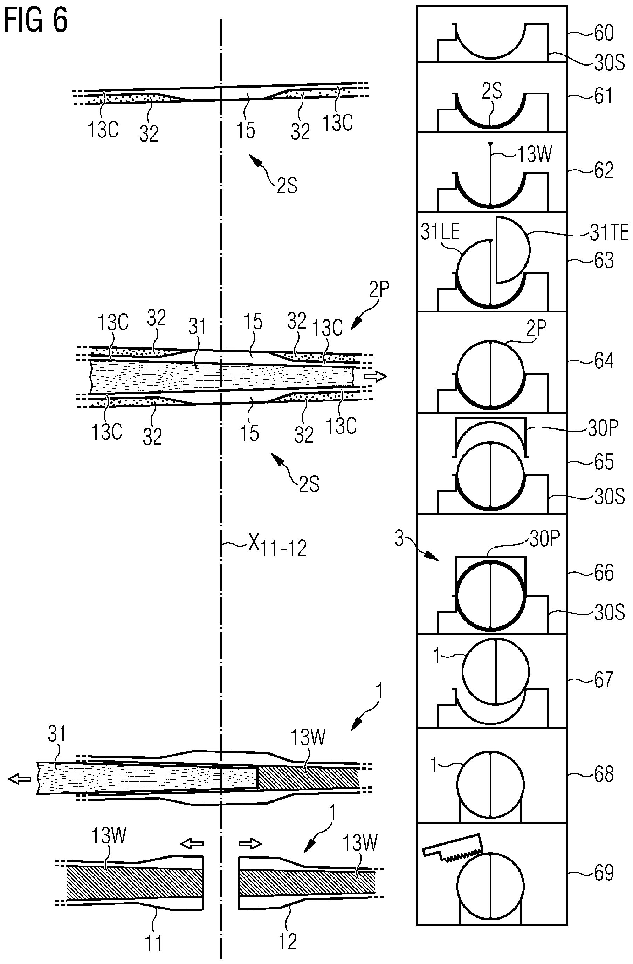

Figure 6 shows stages in the inventive manufacturing method. Each of the method stages is illustrated by a simplified view onto the circular root end of the rotor blade being moulded.

A lower shell 30S is prepared in stage 60, which in the following can be assumed to shape the rotor blade suction side. The rotor blade will comprise two segments but is moulded in one piece, and the cured rotor blade will be cut at the junction X₁₁₋₁₂ between segments.

In stage 61, after preparing the mould by placing dummies 32 at either side of the junction X₁₁₋₁₂, the lower layup 2S for both segments is arranged in the lower shell 30S including suction-side spar caps 13C and a suction-side connector 15, which can be arranged as explained in any of Figures 2 - 5 above so that inward-facing surfaces 130, 150 at the junction X₁₁₋₁₂ lie in a common plane 13P. The region about the junction X₁₁₋₁₂ is shown in cross-section on the left.

In stage 62, a web 13W is connected to the suction-side spar cap 13C, and two parts 31LE, 31TE of a mandrel 31 are placed on either side of the web 13W in stage 63.

In stage 64, the upper layup 2P for both segments is arranged over the mandrel 31LE, 31TE including pressure-side spar caps 13C and a pressure-side connector 15. Here also, inward-facing surfaces 130, 150 at the junction X₁₁₋₁₂ lie in a common plane 13S as indicated on the left.

The mould is closed in stage 65 by placing the upper shell 30P over the upper layup 2P. Casting and curing steps are performed in stage 66, and the cured rotor blade 1 is de-moulded in stage 67. The mandrel 31LE, 31TE is removed in stage 68. On the left, the partial cross-section of the cured rotor blade 1 shows the shear web 13W in the outboard segment 12. In a final stage 69, the rotor blade 1 is cut at the joint X₁₁₋₁₂ to separate the segments 11, 12. As shown on the left, the "extra material" required in the connector 15 is located towards the rotor blade exterior. This has the beneficial effect that the height of the web 13W is maintained at a favourable maximum across the junction between segments 11, 12, so that the assembled rotor blade 1 is characterized by favourably high load-bearing capacity even though it is assembled from two physically separate parts. The partial cross-section shows the shear web 13W in the inboard segment 12 and the shear web 13W in the outboard segment 12. When the rotor blade 1 is assembled, the shear web sections can be connected.

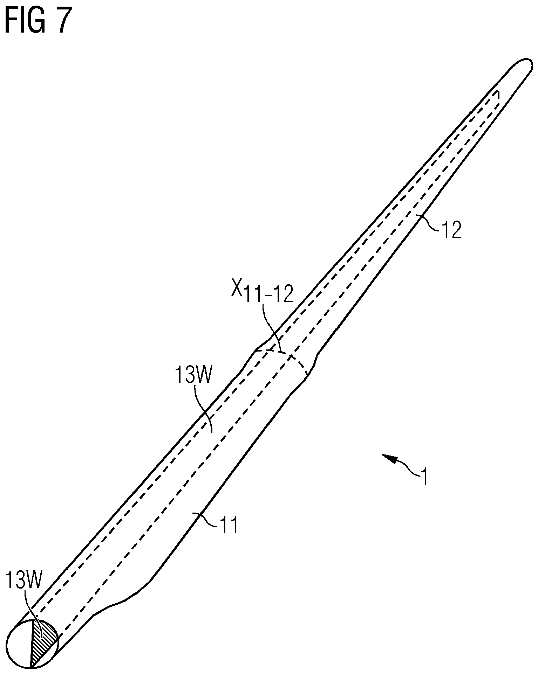

Figure 7 shows an exemplary embodiment of the inventive rotor blade 1, indicating the junction X₁₁₋₁₂ between an inboard segment 11 and an outboard segment 12, and the slight "bulge" in that region owing to the placement of the connectors 15.

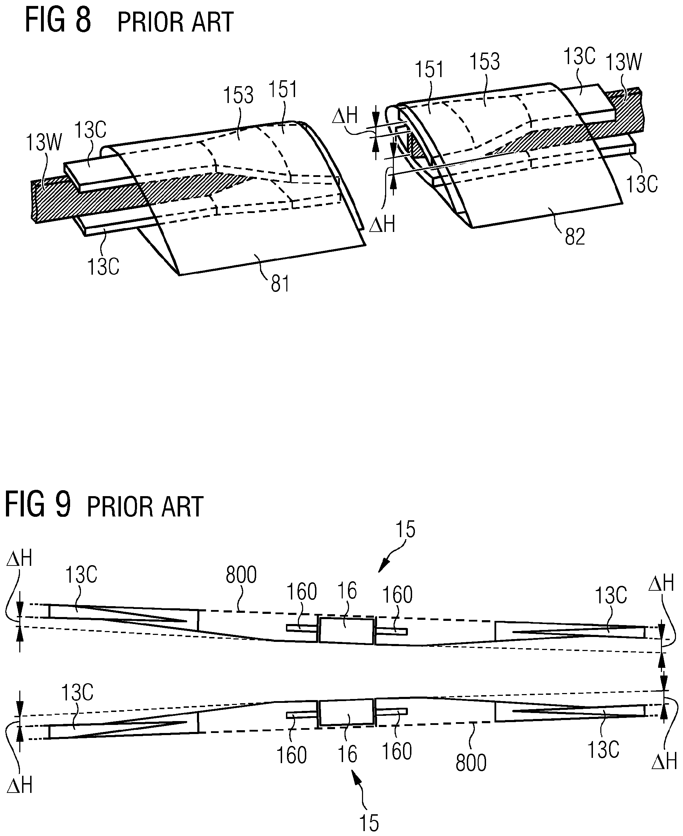

Figure 8 and Figure 9 illustrate a problem associated with prior art manufacturing methods. The junction between two rotor blade segments 81, 82 is shown in Figure 8, with ghost lines indicating connectors 15 and spar caps 13C. Figure 9 shows the connectors 15 and spar caps 13C in cross-section. For structural stability of the assembled rotor blade, each connector is thicker than a spar cap and is realised as a physical extension of a spar cap, so that the spar cap of one rotor blade segment is structurally connected to its continuation spar cap in the adjacent rotor blade segment. To obtain a smooth outer surface of the conventional rotor blade 8, the connectors 15 are placed so that the "extra thickness" protrudes into the interior of the rotor blade. The interior cavity of the inboard segment 81 narrows in the direction of the joint, and widens again in the interior cavity of the outboard segment 82. As a result, the rotor blade 8 cannot be manufactured using the "closed mould" or integral moulding method mould. This is because a mandrel shaped to supporting the upper layup of the inboard segment 81 and outboard segment 82 would of necessity have an "undercut" and it would not possible to pull such a mandrel out of the cured rotor blade 8. Therefore, at least the outboard segment 82 of such a rotor blade 8 must be manufactured using the "butterfly" moulding method with separate mould for the suction side and pressure side, adding significantly to the overall cost of manufacture. A further drawback of the conventional modular rotor blade 8 is the reduction in height of the web extending across the junction between segments 81, 82. In the connector region, the web height is significantly less than the web height at the outboard end of the inboard segment 81 as indicated in the diagram. The total reduction 2·ΔH in web height (i.e. beam height) at the connection interface means a significantly reduced load-bearing capacity for that rotor blade 8.

Although the present invention has been disclosed in the form of preferred embodiments and variations thereon, it will be understood that numerous additional modifications and variations could be made thereto without departing from the scope of the invention. For example, the segmented or modular rotor blade can be shaped for installation to a three-blade horizontal-axis wind turbine, a two-blade horizontal-axis wind turbine, a vertical-axis wind turbine, etc.

For the sake of clarity, it is to be understood that the use of "a" or "an" throughout this application does not exclude a plurality, and "comprising" does not exclude other steps or elements.

## Claims

1. A method of manufacturing a wind turbine rotor blade (1) comprising two or more rotor blade segments (11, 12), which method comprises the steps of
- providing a mould (3, 30S, 30P) for the entire rotor blade (1), the mould comprising a lower shell (30S) and an upper shell (30P);
- forming a lower layup (2S) in the lower shell (30S), which lower layup (2S) includes a connector (15) for adjacent rotor blade segments (11, 12) and a spar cap (13C) on either side of the connector (15);
- placing a mandrel (31) onto the lower layup (2S), the mandrel (31) extending across the connector (15) of the lower layup (2S);
- forming a corresponding upper layup (2P) over the mandrel (31), which upper layup (2P) comprises a connector (15) for adjacent rotor blade segments (11, 12) and a spar cap (13C) on either side of the connector (15); and
- placing the upper shell (30P) onto the upper layup (2P).

2. A method according to the preceding claim, wherein the step of forming a layup (2S, 2P) comprises arranging layers of composite material (20) and embedding a spar cap (13C) for each rotor blade segment (11, 12) in the composite material layers (20).

3. A method according to any of the preceding claims, wherein the inward-facing surfaces (130, 150) of the spar caps (13C) and connector (15) of a layup (2S, 2P) are arranged to lie in a common plane (13P).

4. A method according to any of the preceding claims, comprising a step of connecting a modular shear web (13W) between spar caps (13C) of the lower layup (2S) and spar caps (13C) of the upper layup (2P), which modular shear web (13W) comprises an inboard section and an outboard section.

5. A method according to the preceding claim, wherein the mandrel (31) comprises a first mandrel part (31LE) shaped for placement on one side of the shear web (13W) and a second mandrel part (31TE) shaped for placement on the other side of the shear web (13W).

6. A method according to any of the preceding claims, comprising a step of forming a scarf joint (155) between a spar cap (13C) and a connector (15).

7. A method according to any of the preceding claims, comprising a step of arranging a height adapter (32) between a shell (30S, 30P) and a layup (2S, 2P).

8. A method according to any of the preceding claims, comprising subsequent steps of
- performing resin infusion through the layup (2S, 2P) and curing the resin-infused layup (2S, 2P);
- opening the mould (3) and removing the cured rotor blade (1); and
- withdrawing the mandrel (31) from the interior of the cured rotor blade (1).

9. A method according to the preceding claim, comprising a step of cutting the cured rotor blade (1) to separate the rotor blade segments (11, 12).

10. A method according to the preceding claim, comprising a step of connecting a shear web section (13W) of the inboard segment (11) to a shear web section (13W) of the outboard segment (12).

11. A wind turbine rotor blade (1) manufactured using the method according to any of claims 1 to 10.

12. A wind turbine rotor blade according to the preceding claim, wherein a connector (15) between rotor blade segments (11, 12) comprises complementary end-pieces (151) at the suction side (1S) and complementary end-pieces (151) at the pressure side (1P).

13. A wind turbine rotor blade according to claim 11 or claim 12, wherein the thickness (H15) of a connector end-piece (151) is at least 130% of the thickness (H13C) of a spar cap (13C) .

14. A wind turbine rotor blade according to any of claims 11 to 13, wherein the complementary end-pieces (151) of a connector (15) comprise an arrangement of matching spanwise inserts (152) arranged to receive fasteners (160) during assembly of the rotor blade (1).

15. A wind turbine rotor blade according to any of claims 11 to 14, comprising a fastener block (16) arranged between the end-pieces (151) of each connector (15).
